# EUROPEAN PATENT APPLICATION

(11) **EP 2 700 910 A1**
(43) Date of publication of application: **26.02.2014**
(21) Application number: 12851584.8
(22) Date of filing: 26.10.2012
(51) Int. Cl.: G01D 5/34

(54) **PHOTOELECTRIC SENSOR**

(30) Priority: 25.11.2011 CN 201110382803
(71) Applicant: Omron Corporation, Kyoto-shi, Kyoto 600-8530 (JP)
(72) Inventor: XU, Anna, Shangai, 201206 (CN); SHEN, Haimiao, Shangai, 201206 (CN)
(74) Representative: Horn Kleimann Waitzhofer
(86) International application number: PCT/CN2012/001434
(87) International publication number: WO 2013/075397

(57) **Abstract**

A photoelectric sensor (2), and in particular, a photoelectric sensor (2) which can eliminate close range detection blind areas without shortening the detection distance, is described. The photoelectric sensor (2) includes a current-limiting resistor (R1) and a photoelectric diode (PD) connected in series for converting an optical signal to an electric signal for use. Two ends of the current-limiting resistor (R1) are connected in parallel with at least one shunt branch (201, 202, 203). The shunt branch (201, 202, 203) includes a shunt resistor (R2, R3, R4) and a switch circuit (2011, 2021, 2031) connected in series. The switch circuit (2011, 2021, 2031) is switched on when the voltage across two ends of the current-limiting resistor (R1) is greater than a predetermined voltage value depending on the shunt branch (201, 202, 203) and is switched off when the voltage across two ends of the current-limiting resistor (R1) is less than the predetermined voltage value.

## Description

### TECHNICAL FIELD

The present invention relates to a photoelectric sensor, and in particular, to a photoelectric sensor which can eliminate close range detection blind areas without shortening the detection distance.

### BACKGROUND ART

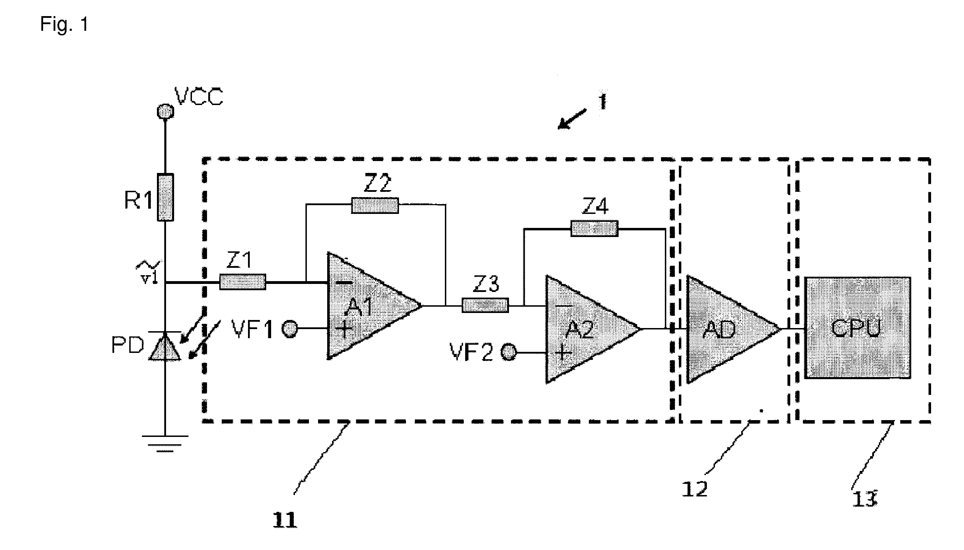

A photoelectric sensor is a key element to realize photoelectric conversion in various photoelectric detection systems, and is a component that converts an optical signal (infrared, visible and ultraviolet radiation) into an electric signal. The photoelectric detection method has advantages, such as high precision, quick response and being contactless, with a number of measurable parameters; the structure of sensors is simple, and forms are flexible and diverse; therefore, photoelectric-type sensors are in very extensive use among detection and control. A photoelectric diode is the most common photoelectric conversion component. The photocurrent and light intensity are directly proportional; therefore, a voltage signal that changes with the light intensity can be obtained on a current-limiting resistor that is connected in series with a photoelectric diode. Fig. 1 is a schematic block diagram of photoelectric sensors of conventional art. As shown in Fig. 1, PD is a photoelectric diode for converting a received optical signal into a photocurrent; R1 is a current-limiting resistor, where the amount of change in the voltage at one end V1 of R1 corresponds that of the photocurrent; block diagram 11 is an amplifier unit for amplifying the voltage signal at V1; block diagram 12 is an analog-to-digital (A/D) converter unit for converting an analog signal (amplified voltage signal at V1) output from the amplifier unit 11 into a digital signal; block diagram 13 is a signal processing unit, for example, a CPU, for receiving the digital signal output from the A/D converter unit and carrying out a digital signal process of the digital signal to obtain necessary information, such as distance. When detecting in a close range with this type of photoelectric sensor, the light intensity is too strong and the photocurrent is very large, making the amount of change in V1 significant. The power of the amplifier unit is normally supplied by the power of the system; therefore, the dynamic range of an input signal of the amplifier unit is limited. When V1 exceeds the dynamic range of the input signal of the amplifier unit, saturation and distortion may occur. At this time, an electric signal output from the photoelectric sensor cannot correspond to the received optical signal, causing so-called close range detection blind areas. When this occurs, normally in conventional art, the current-limiting resistor R1 is made smaller to make the amount of change in V1 smaller to curb the saturation and distortion. Although this type of method can curb the saturation and distortion when the photoelectric sensor is within a close range, an electric signal generated in long range measurement also becomes smaller, therefore, the detection distance of the photoelectric sensor is shortened.

### SUMMARY OF THE INVENTION

### PROBLEMS TO BE SOLVED BY THE INVENTION

To solve the above-mentioned problems present in conventional photoelectric sensors, the present invention provides a photoelectric sensor which eliminates close range detection blind areas without shortening the detection distance.

### MEANS FOR SOLVING THE PROBLEM

The photoelectric sensor of the present invention includes a current-limiting resistor and a photoelectric diode connected in series for converting an optical signal to an electric signal for use. Two ends of the current-limiting resistor are connected in parallel with at least one shunt branch. The shunt branch includes a shunt resistor and a switch circuit connected in series. The switch circuit is switched on when the voltage across two ends of the current-limiting resistor is greater than a predetermined voltage value depending on the shunt branch and is switched off when the voltage across two ends of the current-limiting resistor is less than the predetermined voltage value.

Further, the switch circuit is composed of at least one diode connected in series. The number of the diodes is determined by the predetermined voltage value depending on the shunt branch.

Further, the switch circuit is composed of a Zener diode. The Zener voltage of the Zener diode is determined by the predetermined voltage value depending on the shunt branch.

Further, the photoelectric sensor further includes an amplifier unit, an A/D converter unit and a signal processing unit. A first terminal of the current-limiting resistor is connected to a power supply, a second terminal is connected to one end of the photoelectric diode, and the other end of the photoelectric diode is connected to the ground; an input terminal of the amplifier unit is connected to a second terminal of the current-limiting resistor; an input terminal of the A/D converter unit is connected to an output terminal of the amplifier unit; and an input terminal of the signal processing unit is connected to an output terminal of the A/D converter unit.

Further, the photoelectric sensor further includes a current sensor connected in series in the shunt branch. The current sensor detects shunt current when the shunt branch is switched on. At this time, the current sensor outputs a control signal to the signal processing unit in accordance with the detected shunt current to adjust a conversion factor of the photoelectric converter.

### BRIEF DESCRIPTION OF THE DRAWINGS

Fig. 1 is a block diagram of a specific configuration example of a photoelectric sensor of conventional art.
Fig. 2 is a block diagram of a specific configuration example of a photoelectric sensor of the present invention.

### MODE FOR CARRYING OUT THE INVENTION

Embodiments of the photoelectric sensor of the present invention will be described below with reference to the drawings. The embodiments shown below are merely illustrative and should not be construed as limiting the scope of the present invention. Various modifications and applications which are not demonstrated in the embodiments below can be made without departing from the spirit of the invention.

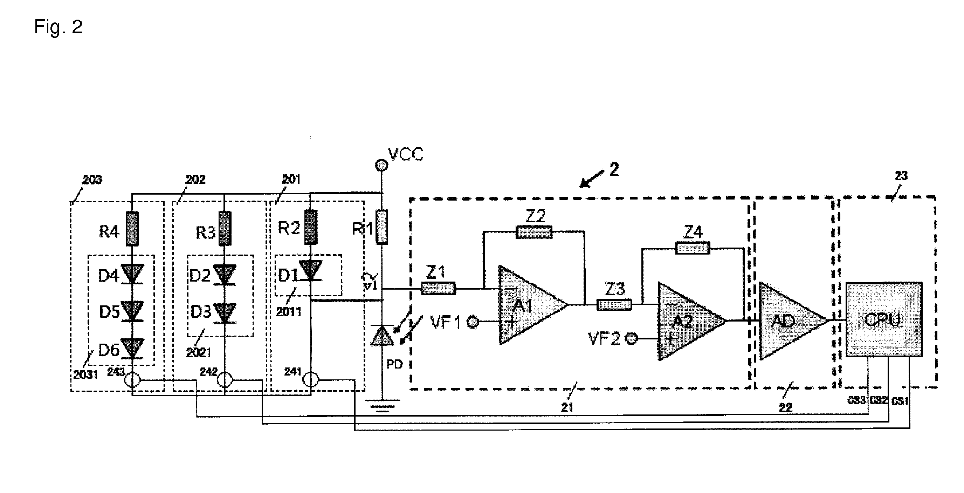

Fig. 2 is a schematic block diagram of an embodiment of a photoelectric sensor of the present invention. The photoelectric sensor 2 includes a current-limiting resistor R1 and a photoelectric diode PD connected in series for converting an optical signal to an electric signal for use. Two ends of the current-limiting resistor R1 are connected in parallel with at least one shunt branch. In the embodiment, shunt branches 201, 202 and 203, for example, are connected in parallel. The shunt branches include a shunt resistor and a switch circuit connected in series. In the embodiment, the shunt branch 201 includes a shunt resistor R2 and a switch circuit 2011; the shunt branch 202 includes a shunt resistor R3 and a switch circuit 2021; and the shunt branch 203 includes a shunt resistor R4 and a switch circuit 2031. Each switch circuit 2011, 2021 and 2031 is switched on when the voltage across two ends of the current-limiting resistor R1 is greater than a predetermined voltage value depending on each shunt branch, respectively, and is switched off when the voltage across two ends of the current-limiting resistor R1 is less than the corresponding predetermined voltage value. Situations where the voltage across two ends of the current-limiting resistor R1 "equals to" the predetermined voltage value depending on each shunt branch, respectively, may be classified as "greater" or "less than".

Further, the switch circuit is composed of at least one diode connected in series (see Fig. 2). The number of the diode is determined by the predetermined voltage value depending on the shunt branch, i.e., the branch where the diode is located. In the embodiment, the switch circuit 2011 is composed of a diode D1; the switch circuit 2021 is composed of diodes D2 and D3 connected in series; the switch circuit 2031 is composed of diodes D4, D5 and D6 connected in series.

Further, the switch circuit may also be composed of a Zener diode connected in series in a shunt branch (not shown in the drawing). The Zener voltage of the Zener diode is determined by the predetermined voltage value depending on the shunt branch.

Further, the switch circuit may also be composed of a three-terminal component.

Further, a first terminal of the current-limiting resistor R1 is connected to the power supply VCC, a second terminal is connected to one end of the photoelectric diode PD, and the other end of the photoelectric diode PD is connected to the ground.

Further, the photoelectric sensor 2 further includes an amplifier unit 21, the input terminal of which is connected to the second terminal of the current-limiting resistor R1; an A/D converter unit 22, the input terminal of which is connected to the output terminal of the amplifier unit 21; and a signal processing unit 23, the input terminal of which is connected to the output terminal of the A/D converter unit 22. A specific configuration example of the amplifier unit 21 may be an amplifier unit with two-stage amplification, the first stage of which is composed of an operational amplifier A1, a resistor Z1, a resistor Z2 and a reference voltage VF1 and the second stage of which is composed of an operational amplifier A2, a resistor Z3, a resistor Z4 and a reference voltage VF2.

Further, when measurement of analog light intensity is necessary, photoelectric sensor 2 may further include a current sensor 241 connected in series in a shunt branch, for example, the shunt branch 201. The current sensor detects shunt current when the switch circuit 2011 in the shunt branch 201 is switched on. At this time, the current sensor outputs control signal CS1 to the signal processing unit 23 in accordance with the detected shunt current to adjust a conversion factor of the photoelectric sensor 2. In Fig. 2, as a specific configuration example, a current sensor 241 is connected in series in the shunt branch 201; a current sensor 242 is connected in series in the shunt branch 202; and a current sensor 243 is connected in series in the shunt branch 203 for generating control signals CS1, CS2 and CS3, respectively, to adjust three different conversion factors of the photoelectric sensor 2.

As shown in Fig. 2, the distinction between the photoelectric sensor 2 of the present invention and the photoelectric sensor 1 of conventional art is that the shunt branches 201, 202 and 203 and current sensors 241, 242 and 243 in each shunt branch are added to the photoelectric sensor 2 of the present invention. The number of the shunt branches and current sensors is not limited in the present invention, but may be selected depending on actual circumstances. Specific explanations are made with three shunt branches 201, 202 and 203 in the specific configuration example of Fig. 2. The shunt branch 201 has the shunt resistor R2 and the diode D1 that composes the switch circuit 2011. The shunt resistor R2 and the diode D1 are connected in series, and are connected in parallel with two ends of the current-limiting resistor R1. The shunt branch 202 has the shunt resistor R3 and the diodes D2 and D3 that compose the switch circuit 2021. The shunt resistor R3 and the diodes D2 and D3 are connected in series in this order, and are connected in parallel with two ends of the current-limiting resistor R1. The shunt branch 203 has the shunt resistor R4 and the diodes D4, D5 and D6 that compose the switch circuit 2031. The shunt resistor R4 and the diodes D4, D5 and D6 are connected in series in this order, and are connected in parallel with two ends of the current-limiting resistor R1. The current sensors 241, 242 and 243 are connected in series in the shunt branches 201, 202 and 203, respectively.

Hereafter, the photoelectric sensor 2 of the present invention is described with reference to Fig. 2 on operational processes where the light receiving distance is long and short, respectively.

When the light receiving distance of the photoelectric sensor 2 is long, the light that photoelectric diode PD receives is weaker and generated photocurrent is smaller; therefore, voltage drop on the current-limiting resistor R1 is smaller. If insufficient to cause diodes to conduct on each branch, shunt branches 201, 202 and 203 are switched off. Subsequently, the voltage signal of V1 is amplified in the amplifier unit 21, and converted from analog to digital in the A/D converter unit 22. Finally, a digital signal process is carried out in the signal processing unit 23 to the converted digital signal using a photoelectric conversion factor that corresponds to R1 to obtain necessary parameters.

When the light receiving distance of the photoelectric sensor 2 becomes short, the light becomes strong, the photocurrent becomes large, and the voltage drop across two ends of the current-limiting resistor R1 becomes large. If the voltage drop across two ends of the current-limiting resistor R1 is greater than the voltage that causes the diode D1 to conduct, the diode D1 is brought into conduction, i.e., the shunt branch 201 is switched on and shunted. At this time, the voltage drop at V1 is in fact generated by resistance after the current-limiting resistor R1 and the shunt resistor R2 are connected in parallel. Because the value of resistance after R1 and R2 are connected in parallel is smaller than that of R1, the voltage signal at V1 becomes smaller, curbing saturation and distortion caused by the voltage signal at V1 being too large and exceeding the dynamic range of input signals of the amplifier unit. Subsequently, the voltage signal of V1 is amplified in the amplifier unit 21, and converted from analog to digital in the A/D converter unit 22. Finally, a digital signal process is carried out in the signal processing unit 23 to the converted digital signal to obtain necessary parameters. At the same time, the current sensor 241 connected in series in the shunt branch 201 detects the shunt current I₂₀₁, while generating a control signal CS1 that corresponds to the shunt current I₂₀₁ and outputting to the signal processing unit 23. The signal processing unit 23 adjusts conversion factors of the photoelectric sensor 2 depending on the control signal CS1 so that the conversion factors correspond to the parallel relation between R1 and R2.

When the light receiving distance of the photoelectric sensor 2 is closer, the light is closer and the photocurrent is larger, making the voltage drop across two ends of the shunt resistor R1 larger. If the voltage drop across two ends of the shunt resistor R1 is greater than the sum of the conduction voltage of the diodes D2 and D3, the diodes D1, D2 and D3 are all brought into conduction, i.e., the shunt branches 201 and 202 are both switched on and shunted. At this time, the voltage drop at V1 is in fact generated by resistance after the resistors R1, R2 and R3 are connected in parallel. Because the value of resistance after R1, R2 and R3 are connected in parallel is smaller than that after R1 and R2 are connected in parallel, the voltage signal at V1 becomes smaller, curbing saturation and distortion caused by the voltage signal at V1 being too large and exceeding the dynamic range of input signals of the amplifier unit 21. Subsequently, the voltage signal of V1 is amplified in the amplifier unit 21, and converted from analog to digital in the A/D converter unit 22. Finally, a digital signal process is carried out in the signal processing unit 23 to the converted digital signal to obtain necessary parameters. At the same time, the current sensor 241 connected in series in the shunt branch 201 detects the shunt current I₂₀₁ and the current sensor 242 connected in series in the shunt branch 202 detects the shunt current I₂₀₂, while generating control signals CS1 and CS2 that correspond to the shunt current I₂₀₁ and the shunt current I₂₀₂, respectively, and outputting to the signal processing unit 23. The signal processing unit 23 adjusts conversion factors of the photoelectric sensor 2 in accordance with CS1 and CS2 so that the conversion factors correspond to the parallel relation between resistors R1, R2 and R3.

As described above, photoelectric conversion factors are adjusted by the signal processing unit 23 in accordance with control signals CS1, CS2 and CS3. As an example of conversion, the photoelectric conversion factors may be adjusted in accordance with control signals CS1, CS2 and CS3 in the A/D converter unit (not shown in the drawing).

Here, diodes of the present invention as a switch element may be diodes that have the same unilateral conduction threshold voltage, or may be diodes that have different unilateral conduction threshold voltages.

When the light receiving distance of the photoelectric sensor 2 is closer, the state where the shunt branches 201, 202 and 203 are brought into conduction at the same time is similar to the state where the shunt branches 201 and 202 are brought into conduction at the same time, and thus are not described in details here.

Here, when the three shunt branches are all switched off, conversion factors are determined by R1; when only the shunt branch 201 is switched on, conversion factors are determined by the parallel relation between R1 and R2; when the shunt branches 201 and 201 are switched on, conversion factors are determined by the parallel relation of R1, R2 and R3; and when the shunt branches 201, 202 and 203 are all switched on, conversion factors are determined by the parallel relation between R1, R2, R3 and R4. When the light receiving distance of photoelectric sensor 2 gradually increases, the light becomes weaker and the photocurrent becomes smaller, making the voltage drop across two ends of the shunt resistor R1 smaller. If the voltage drop across two ends of the shunt resistor R1 is less than the sum of the conduction voltage of the diodes D2 and D3 and greater than the conduction voltage of the diode D1, the shunt branch 202 is switched off, only the shunt branch 201 is switched on and shunted. When the light receiving distance of the photoelectric sensor 2 becomes even longer, the light becomes even weaker and the photocurrent becomes even smaller. If the voltage drop across two ends of the shunt resistor R1 is less than the conduction voltage of the diode D1, the shunt branch 201 is switched off.

Here, diodes as a switch element may be replaced by Zener diodes. The Zener diodes are brought to conduction when the voltage across two ends of the current-limiting resistor R1 is greater than the predetermined voltage value, and are switched off when the voltage across two ends of the current-limiting resistor R1 is less than the predetermined voltage value. "Equals" may be classified as "greater" or "less than". Operating principles are similar to those of the diodes above, and thus are not described in details here.

Here, if the switch circuit is switched on, then the corresponding shunt branch is switched on; if the switch circuit is switched off, then the corresponding shunt branch is switched off. Although the present invention has been described with reference to the embodiments above, the embodiments are for illustrative purposes only. The present invention is not to be limited to the embodiment described above, and various modifications and alterations can be made without departing from the scope of the present invention.

## Claims

1. A photoelectric sensor comprising a current-limiting resistor and a photoelectric diode connected in series and configured to convert an optical signal to an electric signal for use, wherein
two ends of the current-limiting resistor are connected in parallel with at least one shunt branch comprising a shunt resistor and a switch circuit connected in series, and
the switch circuit is switched on when the voltage across two ends of the current-limiting resistor is greater than a predetermined voltage value depending on the shunt branch and is switched off when the voltage across two ends of the current-limiting resistor is less than the predetermined voltage value.

2. The photoelectric sensor according to claim 1, wherein
the switch circuit comprises at least one diode connected in series, and
the number of the diodes is determined by the predetermined voltage value depending on the shunt branch.

3. The photoelectric sensor according to claim 1, wherein
the switch circuit comprises a Zener diode connected in series in the shunt branch, and
the Zener voltage of the Zener diode is determined by the predetermined voltage value depending on the shunt branch.

4. The photoelectric sensor according to any one of claims 1 to 3, further comprising an amplifier unit, an A/D converter unit and a signal processing unit, wherein
a first terminal of the current-limiting resistor is connected to a power supply, a second terminal is connected to one end of the photoelectric diode, and the other end of the photoelectric diode is connected to the ground,
an input terminal of the amplifier unit is connected to a second terminal of the current-limiting resistor,
an input terminal of the A/D converter unit is connected to an output terminal of the amplifier unit, and
an input terminal of the signal processing unit is connected to an output terminal of the A/D converter unit.

5. The photoelectric sensor according to claim 4, further comprising a current sensor connected in series in the shunt branch, wherein
the current sensor detects a shunt current when the switch circuit in the shunt branch is switched on; and at this time, the current sensor outputs a control signal to the signal processing unit in accordance with the detected shunt current to adjust a conversion factor of the photoelectric converter.
